# EUROPÄISCHE PATENTSCHRIFT

(11) **EP 3 475 667 B1**
(45) Veröffentlichungstag und Bekanntmachung des Hinweises auf die Patenterteilung: **18.03.2020**
(21) Anmeldenummer: 17718086.6
(22) Anmeldetag: 19.04.2017
(51) Int. Cl.: G01F 1/684, G01F 15/18, G01F 1/688, G01F 15/00

(54) **SENSOR FÜR EIN THERMISCHES DURCHFLUSSMESSGERÄT, EIN THERMISCHES DURCHFLUSSMESSGERÄT UND EIN VERFAHREN ZUM HERSTELLEN EINES SENSORS EINES THERMISCHEN DURCHFLUSSMESSGERÄTS**
SENSOR FOR A THERMAL FLOWMETER, THERMAL FLOWMETER, AND METHOD FOR PRODUCING A SENSOR OF A THERMAL FLOWMETER
CAPTEUR DE DÉBITMÈTRE THERMIQUE, DÉBITMÈTRE THERMIQUE ET PROCÉDÉ DE FABRICATION D'UN CAPTEUR D'UN DÉBITMÈTRE THERMIQUE

(30) Priorität: 27.06.2016 DE 102016111701
(43) Veröffentlichungstag der Anmeldung: 01.05.2019
(73) Patentinhaber: Endress+Hauser Flowtec AG, 4153 Reinach (CH)
(72) Erfinder: GABERTHÜEL, Stephan, 4104 Oberwil (CH); GRÜN, Alexander, 79539 Lörrach (DE); SCHULTHEIS, Hanno, 79539 Lörrach (DE); BAUR, Tobias, 4145 Reinach (CH)
(74) Vertreter: Andres, Angelika Maria
(86) Internationale Anmeldenummer: PCT/EP2017/059259
(87) Internationale Veröffentlichungsnummer: WO 2018/001593

(56) Entgegenhaltungen:
- WO-A1-02/14008
- DE-A1-102012 206 647
- DE-A1-102013 208 785
- US-A- 4 439 918
- US-A1- 2009 050 678

## Beschreibung

Die Erfindung betrifft einen Sensor für ein thermisches Durchflussmessgerät, ein thermisches Durchflussmessgerät mit einem erfindungsgemäßen Sensor und ein Verfahren zum Herstellen eines erfindungsgemäßen Sensors eines thermischen Durchflussmessgeräts.

Thermische Durchflussmessgeräte werden seit langem dazu verwendet, den Massedurchfluss eines Mediums durch eine Rohrleitung zu bestimmen. Dabei greifen solche Geräte im Wesentlichen auf zwei Messprinzipien zurück.

Bei einem ersten Messprinzip wird ein Sensor im durch die Rohrleitung strömenden Medium derart beheizt, dass seine Temperatur konstant bleibt. Unter Voraussetzung gleichbleibender Medieneigenschaften wie Temperatur, Dichte oder Zusammensetzung lässt sich über den zum Halten der Temperatur notwendigen Heizstrom auf den Massedurchfluss des Mediums schließen. Bei variabler Medientemperatur bietet sich an, einen zweiten Sensor zur Temperaturmessung des Mediums zu verwenden.

Bei einem zweiten Messprinzip wird das strömende Medium mit einer konstanten Heizleistung beheizt und die Temperatur des Mediums stromabwärts gemessen. Ein höherer Massedurchfluss führt zu einer geringeren Messtemperatur und umgekehrt. Auch hier kann ein Sensor zur Temperaturüberwachung des Mediums sinnvoll sein. Bei den beheizten Sensoren ist eine reproduzierbare Fertigung wichtig um eine hohe Messgenauigkeit zu erreichen. Variiert die Lotschichtdicke von Sensor zu Sensor, so variiert auch der benötigte Heizstrom. Damit die Durchflussmessung korrekt funktioniert, ist es zwingend notwendig, dass die Temperaturanpassung zwischen Sensor und Medium schnell funktioniert und dass Schwankungen hinsichtlich dieser Größe zwischen einzelnen Sensoren möglichst gering ausfallen.

Ein typischer Sensor weist dabei einen Sensorbecher auf, in welchem ein Sensorelement angeordnet ist und per Lotschicht an den Sensorbecher angeordnet ist.

Hierbei ist eine gleichmäßige Dicke der Lotschicht zwischen Sensorbecher und Sensorelement erwünscht, um eine hohe Messgenauigkeit zu erreichen. Aus dem technischen Bereich des Lötens sind Lösungen bekannt, welche zu einer geringen Totschichtdickenschwankung führen, jedoch nicht in zufriedenstellendem Ausmaß oder auf eine für Sensoren eines thermischen Durchflussmessgeräts unvorteilhafte Art und Weise. So zeigt die Patentschrift US4626478 einen Gegenstand mit Auswölbungen, welche einen Abstand zwischen dem Gegenstand und einem Substrat sicherstellen. Es ist jedoch sehr aufwendig, ein Sensorelement mit solchen Auswölbungen zu DE 102012208785A1 zeigt ein Messgerät mit einer zylinderförmigen Sensorspitze, die ein geschlossenes Gehäuse mit einem Sensorelement in Form eines temperaturabhängigen Widerstands umfasst. Das Sensorelement ist mittels eines Lots thermisch mit dem Gehäuse verbunden, wobei zwischen dem Sensorelement und dem Lot eine wärmeleitende, elektrisch isolierende Schicht angeordnet ist.

Aufgabe der Erfindung ist es daher, einen Sensor für ein thermisches Durchflussmessgerät, ein thermisches Durchflussmessgerät und ein Verfahren zum Herstellen eines Sensors eines thermischen Durchflussmessgeräts vorzuschlagen, wobei der Abstand des Sensorelements zum Sensorbecher sichergestellt wird, ohne das Sensorelement aufwendig bearbeiten zu müssen.

Diese Aufgabe wird gelöst durch einen erfindungsgemäßen Sensor gemäß dem unabhängigen Anspruch 1 sowie ein Verfahren zur Herstellung eines erfindungsgemäßen Sensors gemäß Anspruch 12.

Der erfindungsgemäße Sensor für ein thermisches Durchflussmessgerät umfasst:
einen Sensorbecher, wobei der Sensorbecher eine erste Längsachse und eine Mantelfläche sowie ein offenes Ende und ein geschlossenes zweites Ende mit einem Becherboden aufweist, wobei die Längsachse das erste Ende und das zweite Ende insbesondere senkrecht schneidet, und wobei eine in Richtung des ersten Endes gerichtete Bodenfläche des Becherbodens im Wesentlichen eben ist;
und mindestens ein Sensorelement, wobei das Sensorelement im Sensorbecher im Bereich des Sensorbecherbodens angeordnet ist;
und eine Lotschicht, welche dazu eingerichtet ist, das Sensorelement mit dem Becherboden thermisch zu verbinden,
wobei aus der Bodenfläche mindestens ein Vorsprung hervorsteht, welcher Vorsprung dazu eingerichtet ist, das Sensorelement definiert gegenüber der Bodenfläche zu positionieren, wobei das Sensorelement in direktem Kontakt zu dem mindestens einen Vorsprung steht.

In einer Ausgestaltung weist der Sensorbecher bezüglich einer Querschnittsfläche senkrecht zur ersten Längsachse einen Innendurchmesser auf, wobei die Querschnittsfläche einen in Richtung des offenen Endes höchsten Punkt eines Vorsprungs enthält,
wobei der Vorsprung einen Abstand zur ersten Längsachse aufweist, wobei der Abstand kleiner als ein Drittel des Werts des Innendurchmessers ist,

In einer Ausgestaltung ist der mindestens eine Vorsprung dazu eingerichtet, einen konstanten Abstand zwischen der Bodenfläche und dem Sensorelement sicherzustellen.

In einer Ausgestaltung des Sensors weist der Vorsprung eine Kontaktfläche auf, welche Kontaktfläche insbesondere eine ringförmige, mehreckige oder kreuzförmige Struktur bildet.

In einer Ausgestaltung des Sensors stehen aus der Bodenfläche mindestens zwei Vorsprünge hervor, wobei ein erster Vorsprung eine Linienvorsprung und ein zweiter Vorsprung ein Punktvorsprung oder ein Linienvorsprung ist. Ein Punktvorsprung hat dabei eine Geometrie, welche bei streng mathematischer Betrachtung eine nulldimensionale punktförmige Auflage für das Sensorelement zur Folge hat. Bei Berücksichtigung physikalischer Gegebenheiten ist klar, dass die Punktförmigkeit der Auflage nur unter grober Vereinfachung dieser Gegebenheiten denkbar ist, so dass real eine flächige Auflage vorliegt, wobei diese flächige Auflage weniger als 1% und insbesondere weniger als 1%o einer Grundfläche des Sensorelements einnimmt. Äquivalent gilt für einen Linienvorsprung, dass dessen Geometrie bei streng mathematischer Betrachtung eine eindimensionale linienförmige Auflagefläche zur Folge hat, wobei real eine flächige Auflage vorliegt, wobei diese flächige Auflage weniger als 5% und insbesondere weniger als 5‰ einer Grundfläche des Sensorelements einnimmt

In einer Ausgestaltung des Sensors stehen aus der Bodenfläche drei Punktvorsprünge hervor, welche ein Dreieck aufspannen.

In einer Ausgestaltung des Sensors steht der Vorsprung höchstens 200 µm und insbesondere höchstens 150 µm und bevorzugt höchstens 100 µm aus der Bodenfläche hervor.

In einer Ausgestaltung des Sensors steht der Vorsprung mindestens 20 µm und insbesondere mindestens 50 µm und bevorzugt mindestens 70 µm aus der Bodenfläche hervor.

In einer Ausgestaltung des Sensors weist der Sensorbecher im Bereich des Becherbodens eine Wandstärke von höchstens 1.2 mm und insbesondere höchstens 1 mm und bevorzugt höchstens 0.8 mm auf.

In einer Ausgestaltung des Sensors weist der Sensorbecher im Bereich des Becherbodens eine Wandstärke von mindestens 0.1 mm und mindestens 0.2 mm und bevorzugt mindestens 0.4 mm auf.

In einer Ausgestaltung des Sensors weist das Sensorelement einen Thermistor auf.

In einer Ausgestaltung des Sensors ist der Sensorbecher unter Nichtberücksichtigung des mindestens einen Vorsprungs im Wesentlichen rotationssymmetrisch.

Das erfindungsgemäße thermische Durchflussmessgerät zur Messung des Massedurchflusses eines Mediums in einem Messrohr mit mindestens einem erfindungsgemäßen Sensor umfasst:
ein Messrohr mit einer zweiten Längsachse;
mindestens einen Sensor, welcher in das Messrohr eingelassen ist;
eine elektronische Betriebsschaltung, welche dazu eingerichtet ist, den mindestens einen Sensor zu betreiben.

In einer Ausgestaltung des Durchflussmessgeräts umfasst das Durchflussmessgerät mindestens zwei Sensoren,
wobei die elektronische Betriebsschaltung dazu eingerichtet ist, mindestens einen ersten Sensor zu beheizen, insbesondere mit einem Heizstrom zu speisen,
wobei die elektronische Betriebsschaltung dazu eingerichtet ist, die Temperatur des Mediums mittels mindestens eines zweiten Sensors zu bestimmen,

Das erfindungsgemäße Verfahren zur Herstellung eines erfindungsgemäßen Sensors für ein thermisches Durchflussmessgerät zur Messung des Massedurchflusses eines Mediums in einem Messrohr weist dabei folgende Verfahrensschritte auf:
Erzeugen von mindestens einem Vorsprung aus einer Bodenfläche eines Becherbodens eines Sensorbechers;
Aufbringen einer Lotschicht auf dem Becherboden;
Schmelzen der Lotschicht und Andrücken eines Sensorelements gegen den Vorsprung, wobei das Sensorelement mittels einer Sensorelementgrundfläche Kontakt mit dem Vorsprung aufnimmt;
Erzeugen des Vorsprungs durch Prägen des Becherbodens mittels eines Gesenks, wobei das Gesenk eine Einkerbung aufweist, welche Einkerbung invers zum Vorsprung ist.

In einer Ausgestaltung umfasst das Verfahren zur Herstellung des Sensorbechers Tiefziehen, wobei der Becher aus einem Blech geformt wird.

Es werden also durch die vorliegende Erfindung ein Sensor eines thermischen Durchflussmessgeräts, ein thermisches Durchflussmessgerät und ein Verfahren zur Herstellung eines Sensors eines thermischen Durchflussmessgeräts zur Messung des Massedurchflusses eines Mediums in einem Messrohr vorgeschlagen.

Im Folgenden wird die Erfindung anhand von Ausführungsbeispielen erläutert.
Fig. 1 zeigt eine schematische Darstellung des Sensorbechers sowie des Sensors anhand der Abbildungen 1.1 und 1.2, wobei Abbildung 1.1 eine schematische räumliche Darstellung auf einen längs geschnittenen Sensorbecher eines erfindungsgemäßen Sensors und Abbildung 1.2 einen Längsschnitt durch einen erfindungsgemäßen Sensor mit Sensorbecher und installiertem Sensorelement zeigt.
Fig. 2 zeigt einen schematischen Querschnitt durch ein erfindungsgemäßes thermisches Durchflussmessgerät.
Fig. 3 zeigt einen schematischen Verfahrensablauf zum Herstellen eines erfindungsgemäßen Sensors.

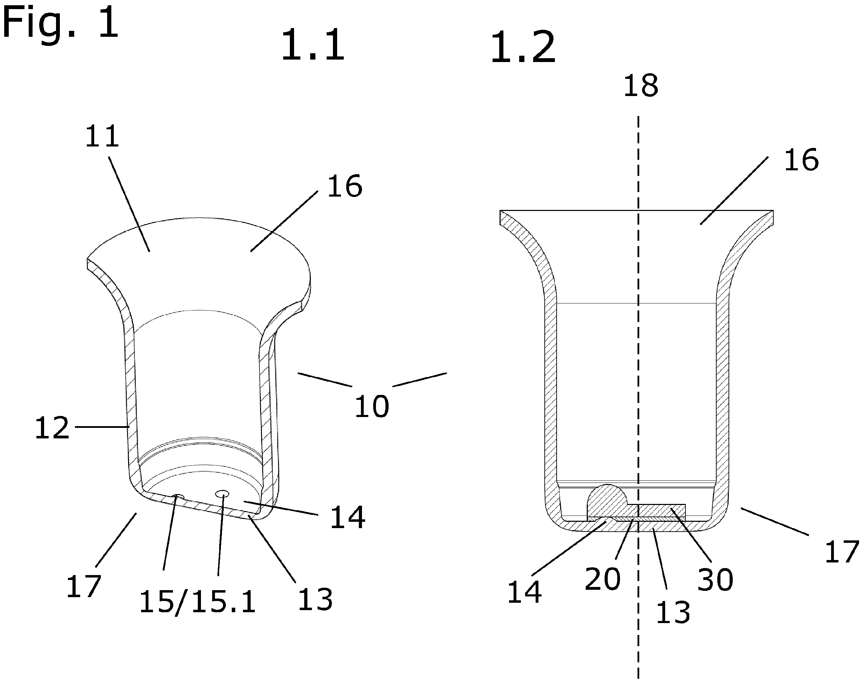

Fig. 1, Abbildung 1.1 zeigt einen Sensorbecher 11 mit einer Mantelfläche 12, einem Becherboden 13 und einer Bodenfläche 14, wobei der Becherboden 13 Vorsprünge 15 aufweist, welche aus der Bodenfläche 14 des Becherbodens 13 in Richtung des offenen Endes 16 des Sensorbechers hervorstehen. Der Sensorbecher ist unter Nichtberücksichtigung der Vorsprünge im Wesentlichen rotationssymmetrisch bezüglich einer ersten Längsachse 18, siehe Fig. 1, Abbildung 1.2.

Fig. 1 Abbildung 1.2 zeigt einen Sensor 10, wobei im Sensorbecher 11 ein Sensorelement 30 angeordnet ist, welches über eine Lotschicht 20 thermisch mit dem Becherboden 13 verbunden ist. Die durch die Vorsprünge 15 sichergestellte definierte Positionierung, insbesondere der gleichmäßige Abstand des Sensorelements 30 zum Becherboden 13 sorgt für einen gleichmäßigen Temperaturübergang mit geringen Schwankungen zwischen verschiedenen Sensoren, wobei das Sensorelement über eine Sensorelementgrundfläche in direktem Kontakt mit dem mindestens einen Vorsprung steht, um einen thermischen Übergangswiderstand zwischen Sensorelement 30 und einem den Sensorbecher umströmenden Medium zu verringern. Idealerweise wird der Sensor dabei nicht über einen Außenbereich der Sensorelementgrundfläche auf dem mindestens einen Vorsprung gelagert. Insbesondere ragt der mindestens eine Vorsprung 15 aus einem Zentralbereich des Becherbodens hervor, wobei ein Abstand des mindestens einen Vorsprungs zur ersten Längsachse 18 weniger als ein Drittel eines Innendurchmessers der Bodenfläche 14 ist. Dadurch lässt sich eine Zerstörung des Sensorelements bei Anbringen des Sensorelements durch das Erzeugen von Biegemomenten im Sensorelement vermeiden.

Der Innendurchmesser bezieht sich dabei auf eine Querschnittsfläche senkrecht zur ersten Längsachse, wobei die Querschnittsfläche einen in Richtung des offenen Endes 16 höchsten Punkt zumindest eines Vorsprungs berührt,

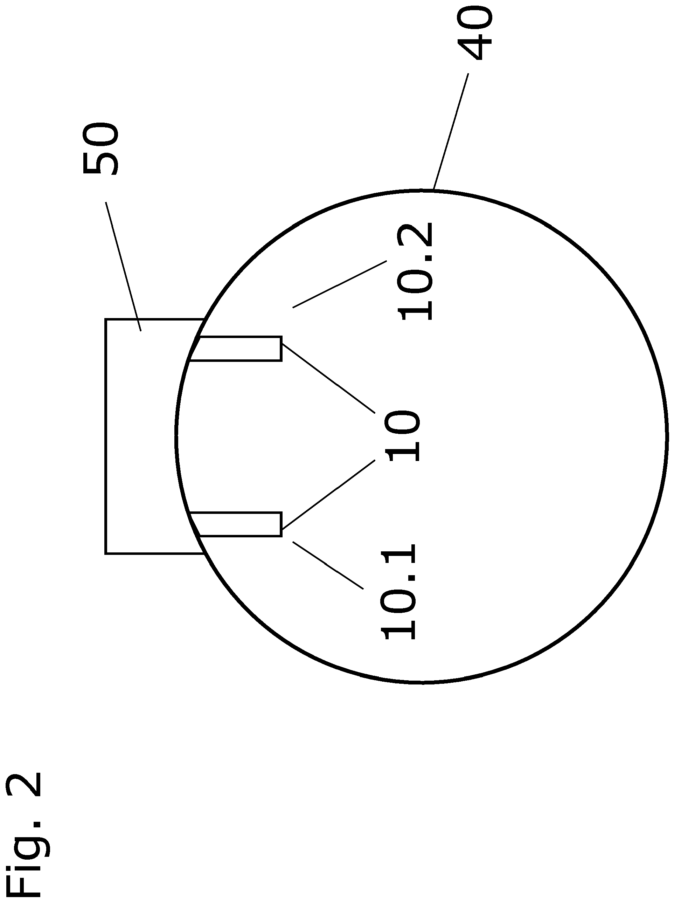

Fig. 2 zeigt einen schematischen Querschnitt durch ein erfindungsgemäßes thermisches Durchflussmessgerät mit einem Messrohr 40, zwei erfindungsgemäße Sensoren 10, welche im Lumen des Messrohrs 40 angeordnet sind, und einer elektronischen Betriebsschaltung 50, welche dazu eingerichtet ist, die Sensoren zu betreiben.

Um den Massedurchfluss eines Mediums durch das Messrohr 40 zu messen, wird beispielsweise ein Sensor 10.1 im durch das Messrohr 40 strömenden Medium derart beheizt, dass eine Temperaturdifferenz gegenüber der Medientemperatur konstant bleibt. Es bietet sich an, einen zweiten Sensor 10.2 zur Temperaturmessung des Mediums zu verwenden, welcher vor oder wie in Fig. 2 gezeigt neben dem beheizten Sensor 10.1 angeordnet ist, um die Temperaturdifferenz zu halten. Unter Voraussetzung gleichbleibender Medieneigenschaften wie Dichte oder Zusammensetzung lässt sich über den zum Halten der Temperatur notwendigen Heizstrom auf den Massedurchfluss des Mediums schließen.

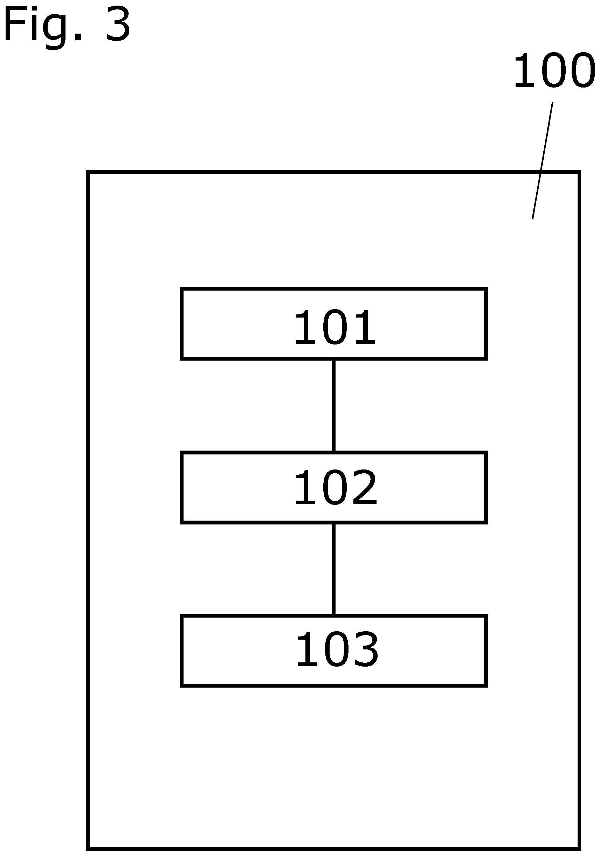

Fig. 3 zeigt den Ablauf eines erfindungsgemäßen Verfahrens 100 zum Herstellen eines erfindungsgemäßen Sensors 10.

In einem ersten Verfahrensschritt 101 wird mindestens ein Vorsprung aus der Bodenfläche 14 des Becherbodens 13 des Sensorbechers 11 erzeugt. Dies geschieht beispielsweise durch Prägen, wobei der Sensorbecher beispielsweise durch ein Tiefziehverfahren aus einem Blech hergestellt ist;
In einem zweiten Verfahrensschritt 102 wird die Lotschicht 20 auf dem Becherboden 13 aufgebracht;
In einem dritten Verfahrensschritt 103 wird die Lotschicht 20 geschmolzen und das mindestens eine Sensorelement 30 gegen den mindestens einen Vorsprung 15 gedrückt;
Bei nachfolgendem Abkühlen der Lotschicht 20 unter deren Schmelzpunkt behält das Sensorelement 30 einen festen Abstand zum Becherboden 13 bei und ist mit diesem über die Lotschicht 20 thermisch verbunden.

### Bezugszeichenliste

- 10: Sensor
- 10.1: Beheizter Sensor
- 10.2: Sensor zur Temperaturmessung
- 11: Sensorbecher
- 12: Mantelfläche
- 13: Becherboden
- 14: Bodenfläche
- 15: Vorsprung
- 15.1: Punktvorsprung
- 16: Offenes Ende
- 17: Geschlossenes Ende
- 18: Erste Längsachse
- 20: Lotschicht
- 30: Sensorelement
- 40: Messrohr
- 50: Elektronische Betriebsschaltung

## Patentansprüche

1. Sensor für ein thermisches Durchflussmessgerät, umfassend:
Einen Sensorbecher, wobei der Sensorbecher (11) eine erste Längsachse (18) und eine Mantelfläche (12) sowie ein offenes Ende (16) und ein geschlossenes zweites Ende (17) mit einem Becherboden (13) aufweist, wobei die erste Längsachse (18) das erste Ende und das zweite Ende insbesondere senkrecht schneidet, und wobei eine in Richtung des ersten Endes gerichtete Bodenfläche (14) des Becherbodens (13) im Wesentlichen eben ist;
und mindestens ein Sensorelement (30), wobei das Sensorelement (30) im Sensorbecher (11) im Bereich des Becherbodens (13) angeordnet ist;
und eine Lotschicht (20), welche dazu eingerichtet ist, das Sensorelement (30) mit dem Sensorboden thermisch zu verbinden,
wobei
aus der Bodenfläche (14) mindestens ein Vorsprung (15) hervorsteht, welcher Vorsprung (15) dazu eingerichtet ist, das Sensorelement (30) definiert gegenüber der Bodenfläche (14) zu positionieren,
**dadurch gekennzeichnet, dass**
das Sensorelement in direktem Kontakt zu dem mindestens einen Vorsprung steht, wobei der Sensorbecher bezüglich einer Querschnittsfläche senkrecht zur ersten Längsachse (18) einen Innendurchmesser aufweist, wobei die Querschnittsfläche einen in Richtung des offenen Endes (16) höchsten Punkt eines Vorsprungs enthält, wobei der mindestens eine Vorsprung (15) einen Abstand zur ersten Längsachse aufweist, wobei der Abstand kleiner als ein Drittel des Werts des Innendurchmessers ist,
wobei der mindestens eine Vorsprung (15) durch Prägen des Becherbodens (13) mittels eines Gesenks erzeugt ist, wobei das Gesenk eine Einkerbung aufweist, welche Einkerbung invers zum Vorsprung (15) ist.

2. Sensor nach Anspruch 1,
wobei der mindestens eine Vorsprung (15) dazu eingerichtet ist, einen konstanten Abstand zwischen der Bodenfläche (14) und dem Sensorelement (30) sicherzustellen.

3. Sensor nach einem der vorigen Ansprüche,
wobei der Vorsprung (15) eine Kontaktfläche aufweist, welche Kontaktfläche insbesondere eine ringförmige, mehreckige oder kreuzförmige Struktur bildet.

4. Sensor nach einem der vorigen Ansprüche,
wobei aus der Bodenfläche (14) mindestens zwei Vorsprünge (15) hervorstehen, wobei ein erster Vorsprung eine Linienvorsprung und ein zweiter Vorsprung ein Punktvorsprung (15.1) oder ein Linienvorsprung ist.

5. Sensor nach einem der vorigen Ansprüche,
wobei aus der Bodenfläche (14) drei Punktvorsprünge (15.1) hervorstehen, welche ein Dreieck aufspannen.

6. Sensor nach einem der vorigen Ansprüche,
wobei der Vorsprung (15) höchstens 200 µm und insbesondere höchstens 150 µm und bevorzugt höchstens 100 µm aus der Bodenfläche (14) hervorsteht.

7. Sensor nach einem der vorigen Ansprüche,
wobei der Vorsprung (15) mindestens 20 µm und insbesondere mindestens 50 µm und bevorzugt mindestens 70 µm aus der Bodenfläche (14) hervorsteht.

8. Sensor nach einem der vorigen Ansprüche,
wobei der Sensorbecher (11) im Bereich des Becherbodens (13) eine Wandstärke von höchstens 1.2 mm und insbesondere höchstens 1 mm und bevorzugt höchstens 0.8 mm aufweist.

9. Sensor nach einem der vorigen Ansprüche,
wobei der Sensorbecher (11) im Bereich des Becherbodens (13) eine Wandstärke von mindestens 0.1 mm und mindestens 0.2 mm und bevorzugt mindestens 0.4 mm aufweist.

10. Thermisches Durchflussmessgerät zur Messung des Massedurchflusses eines Mediums in einem Messrohr mit mindestens einem Sensor nach einem der vorigen Ansprüche,
wobei das thermische Durchflussmessgerät umfasst:
ein Messrohr mit einer zweiten Längsachse;
mindestens einen Sensor, welcher in das Messrohr eingelassen ist;
eine elektronische Betriebsschaltung, welche dazu eingerichtet ist, den mindestens einen Sensor (10) zu betreiben.

11. Durchflussmessgerät nach Anspruch 10,
wobei das thermische Durchflussmessgerät mindestens zwei Sensoren umfasst,
wobei die elektronische Betriebsschaltung dazu eingerichtet ist, mindestens einen ersten Sensor (10) zu beheizen,
wobei die elektronische Betriebsschaltung dazu eingerichtet ist, die Temperatur des Mediums mittels mindestens eines zweiten Sensors zu bestimmen.

12. Verfahren zur Herstellung eines Sensors für ein thermisches Durchflussmessgerät zur Messung des Massedurchflusses eines Mediums in einem Messrohr nach einem der vorigen Ansprüche 1 bis 9,
wobei das Verfahren folgende Verfahrensschritte aufweist:
Erzeugen von mindestens einem Vorsprung (15) aus einer Bodenfläche (14) eines Becherbodens (13) eines Sensorbechers;
Aufbringen einer Lotschicht (20) auf dem Becherboden (13);
Schmelzen der Lotschicht (20) und Andrücken eines Sensorelements (30) gegen den Vorsprung (15);
wobei das Erzeugen des Vorsprungs (15) durch Prägen des Becherbodens (13) mittels eines Gesenks erfolgt, wobei das Gesenk eine Einkerbung aufweist, welche Einkerbung invers zum Vorsprung (15) ist.

13. Verfahren nach Anspruch 12, wobei das Verfahren zur Herstellung des Sensorbechers (11) Tiefziehen umfasst, wobei der Sensorbecher (11) aus einem Blech geformt wird.

## Claims

1. Sensor for a thermal flowmeter, comprising:
A sensor cup, wherein said sensor cup (11) has a first longitudinal axis (18) and a lateral surface (12) as well as an open end (16) and a closed second end (17) with a cup floor (13), wherein the first longitudinal axis (18) cuts the first end and the second end, particularly perpendicularly, and wherein a surface (14) of the cup floor (13), which is oriented in the direction of the first end, is essentially flat;
and at least a sensor element (30), wherein the sensor element (30) is arranged in the sensor cup (11) in the area of the cup floor (13);
and a solder layer (20), which is designed to thermally connect the sensor element (30) with the sensor floor,
wherein
at least one projection (15) projects out of the floor surface (14), wherein said projection (15) is designed to position the sensor element (30) in a defined manner in relation to the floor surface (14),
**characterized in that**
the sensor element is in direct contact to the at least one projection, wherein the sensor cup has an inner diameter in relation to a cross-sectional area perpendicular to the first longitudinal axis (18), wherein the cross-sectional area contains a highest point of a projection in the direction of the open end (16),
wherein the at least one projection (15) presents a distance in relation to the first longitudinal axis, wherein said distance is less than a third of the value of the inner diameter,
wherein the at least one projection (15) is produced by stamping the cup floor (13) using a die, wherein the die features an indentation, said indentation being the inverse of the projection (15).

2. Sensor as claimed in Claim 1,
wherein the at least one projection (15) is designed to guarantee a constant distance between the floor surface (14) and the sensor element (30).

3. Sensor as claimed in one of the previous claims,
wherein the projection (15) has a contact surface, said contact surface particularly forming an annular, polygonal or cruciform structure.

4. Sensor as claimed in one of the previous claims,
wherein at least two projections (15) project out of the floor surface (14), wherein a first projection is a linear projection and a second projection is a punctiform projection (15.1) or linear projection.

5. Sensor as claimed in one of the previous claims,
wherein three punctiform projections (15.1) project out of the floor surface (14), said projections forming a triangle.

6. Sensor as claimed in one of the previous claims,
wherein the projection (15) projects out of the floor surface (14) by a maximum of 200 µm and particularly by a maximum of 150 µm and preferably by a maximum of 100 µm.

7. Sensor as claimed in one of the previous claims,
wherein the projection (15) projects out of the floor surface (14) by a minimum of 20 µm and particularly by a minimum of 50 µm and preferably by a minimum of 70 µm.

8. Sensor as claimed in one of the previous claims,
wherein, in the area of the cup floor (13), the sensor cup (11) has a wall thickness of maximum 1.2 mm and particularly of maximum 1 mm and preferably of maximum 0.8 mm.

9. Sensor as claimed in one of the previous claims,
wherein, in the area of the cup floor (13), the sensor cup (11) has a wall thickness of at least 0.1 mm and particularly of at least 0.2 mm and preferably of at least 0.4 mm.

10. Thermal flowmeter for measuring the mass flow of a medium in a measuring tube with at least one sensor as claimed in one of the previous claims,
said thermal flowmeter comprising:
a measuring tube with a second longitudinal axis;
at least one sensor, which is integrated into the measuring tube;
an electronic operating circuit which is designed to operate the at least one sensor (10).

11. Flowmeter as claimed in Claim 10,
wherein the thermal flowmeter comprises at least two sensors, wherein the electronic operating circuit is designed to heat at least a first sensor (10), wherein the electronic operating circuit is designed to determine the temperature of the medium using at least a second sensor.

12. Procedure for the production of a sensor for a thermal flowmeter designed to measure the mass flow of a medium in a measuring tube as claimed in one of the previous Claims 1 to 9,
wherein said procedure comprises the following steps:
Generation of at least one projection (15) out of a floor surface (14) of a floor (13) of a sensor cup;
Application of a solder layer (20) on the cup floor (13) ;
Fusing of the solder layer (20) and pressing of a sensor element (30) against the projection (15);
wherein the projection (15) is generated by stamping the cup floor (13) with a die, wherein said die has an indentation which is the inverse of the projection (15).

13. Procedure as claimed in Claim 12, wherein said procedure for the production of the sensor cup (11) comprises deep drawing, wherein the sensor cup (11) is formed from a sheet metal.

## Revendications

1. Capteur pour un débitmètre thermique, comprenant :
Un logement de capteur, le logement de capteur (11) présentant un premier axe longitudinal (18) et une surface latérale (12) ainsi qu'une première extrémité ouverte (16) et une deuxième extrémité fermée (17) avec un fond de logement (13), le premier axe longitudinal (18) coupant la première extrémité et la deuxième extrémité, notamment perpendiculairement, et une surface (14) du fond de logement (13), laquelle surface est orientée en direction de la première extrémité, étant pour l'essentiel plane ;
et au moins un élément capteur (30), l'élément capteur (30) étant disposé dans le logement de capteur (11), dans la zone du fond de logement (13) ;
et une couche de brasure (20), laquelle est conçue de telle sorte à relier thermiquement l'élément capteur (30) avec le fond de capteur,
au moins une saillie (15) débordant de la surface de fond (14), laquelle saillie (15) est conçue de telle sorte à positionner l'élément capteur (30) de façon définie par rapport à la surface de fond (14),
**caractérisé**
**en ce que** l'élément capteur est en contact direct avec l'au moins une saillie, le logement de capteur présentant un diamètre intérieur par rapport à une surface de section transversale perpendiculaire au premier axe longitudinal (18), la surface de section transversale comprenant un point d'une saillie qui est le plus élevé dans la direction de l'extrémité ouverte (16), l'au moins une saillie (15) présentant une distance par rapport au premier axe longitudinal, la distance étant inférieure à un tiers de la valeur du diamètre intérieur,
l'au moins une saillie (15) étant obtenue par estampage du fond de logement (13) au moyen d'une matrice, la matrice présentant une encoche, laquelle encoche est de forme complémentaire à la saillie (15).

2. Capteur selon la revendication 1,
pour lequel l'au moins une saillie (15) est conçue de telle sorte à garantir une distance constante entre la surface de fond (14) et l'élément capteur (30).

3. Capteur selon l'une des revendications précédentes,
pour lequel la saillie (15) présente une surface de contact, laquelle surface de contact forme notamment une structure annulaire, polygonale et cruciforme.

4. Capteur selon l'une des revendications précédentes,
pour lequel au moins deux saillies (15) débordent de la surface de fond (14), une première saillie étant une saillie linéaire et une deuxième saillie étant une saillie ponctuelle (15.1) ou une saillie linéaire.

5. Capteur selon l'une des revendications précédentes,
pour lequel trois saillies ponctuelles (15.1) débordent de la surface de fond (14), lesquelles saillies forment un triangle.

6. Capteur selon l'une des revendications précédentes,
pour lequel la saillie (15) déborde au maximum de 200 µm et notamment au maximum de 150 µm et de préférence au maximum de 100 µm de la surface de fond (14).

7. Capteur selon l'une des revendications précédentes,
pour lequel la saillie (15) déborde au minimum de 20 µm et notamment au minimum de 50 µm et de préférence au minimum de 70 µm de la surface de fond (14).

8. Capteur selon l'une des revendications précédentes,
pour lequel le logement de capteur (11) présente dans la zone du fond de logement (13) une épaisseur de paroi de 1,2 mm max. et notamment de 1 mm max. et de préférence de 0,8 mm max.

9. Capteur selon l'une des revendications précédentes,
pour lequel le logement de capteur (11) présente dans la zone du fond de logement (13) une épaisseur de paroi de 0,1 mm min. et notamment de 0,2 mm min. et de préférence de 0,4 mm min.

10. Débitmètre thermique destiné à la mesure du débit massique d'un produit dans un tube de mesure avec au moins un capteur selon l'une des revendications précédentes,
lequel débitmètre thermique comprend :
un tube de mesure avec un deuxième axe longitudinal ;
au moins un capteur, lequel est intégré dans le tube de mesure ;
un circuit d'exploitation électronique, lequel est conçu de telle sorte à exploiter l'au moins un capteur (10).

11. Débitmètre selon la revendication 10,
pour lequel le débitmètre thermique comprend au moins deux capteurs, le circuit d'exploitation électronique étant conçu de telle sorte à chauffer au moins un premier capteur (10),
le circuit d'exploitation électronique étant conçu de telle sorte à déterminer la température du produit au moyen d'un deuxième capteur.

12. Procédé destiné à la fabrication d'un capteur pour un débitmètre thermique destiné à la mesure du débit massique d'un produit dans un tube de mesure selon l'une des revendications 1 à 9,
lequel procédé comprend les étapes suivantes :
Génération d'une saillie (15) à partir d'une surface (14) d'un fond (13) d'un logement de capteur ;
Application d'une couche de brasure (20) sur le fond de logement (13) ;
Fusion de la couche de brasure (20) et pressage d'un élément capteur (30) contre la saillie (15) ;
la génération de la saillie (15) étant obtenue par estampage du fond de logement (13) au moyen d'une matrice, la matrice présentant une encoche, laquelle encoche est de forme complémentaire à la saillie (15).

13. Procédé selon la revendication 12, lequel procédé comprend une opération d'emboutissage pour la fabrication du logement de capteur (11), le logement de capteur (11) étant formé à partir d'une tôle.
